# EUROPEAN PATENT APPLICATION

(11) **EP 4 684 635 A1**
(43) Date of publication of application: **28.01.2026**
(21) Application number: 24773741.4
(22) Date of filing: 14.03.2024
(51) Int. Cl.: A01K 61/00, A01K 61/10, A01K 61/60, A01K 63/00, A01K 63/02, A01K 67/00, B63B 1/10, B63B 1/12, B63B 35/14, B63B 35/24, B63B 35/26, B63B 35/44

(54) **SAILBOAT FOR FISH FARMING IN THE OPEN SEA OR OCEAN**

(30) Priority: 20.03.2023 CL 202300797
(71) Applicant: Buschmann Schirmer, Walter Francisco Alfredo, Puerto Montt, 5480000 (CL)
(72) Inventor: Buschmann Schirmer, Walter Francisco Alfredo, Puerto Montt, 5480000 (CL)
(74) Representative: ABG Intellectual Property Law, S.L.
(86) International application number: PCT/CL2024/050017
(87) International publication number: WO 2024/192541

(57) **Abstract**

The present invention relates to a sailboat (1) of the quadrimaran type for fish farming in the open sea or ocean, comprising at least one basic structure (2), at least one containment net (5), at least one wheelhouse and accommodations (3), at least one sail system (4) and at least one storage silo (6), which are modular and/or detachable. According to the invention, the at least one basic structure (2) comprises: at least two main hulls (7), which are parallel and spaced apart from each other and connected or fastened to each other by means of at least one arm (8); and, adjacent to each of said at least two main hulls (7), at least two secondary hulls (9) with smaller perimeters than those of the at least two main hulls (7), and which are arranged parallel to each outboard side at a distance from said at least two main hulls.

## Description

### FIELD OF THE INVENTION

The present invention falls within the field of aquaculture and relates to a sailboat for fish farming in open or oceanic sea, formed by a vessel of the quadrimaran type, which can be moved from one place to another and can be kept in motion throughout the entire farming period or can remain stationary in a predetermined location for the required time. Preferably, the present invention corresponds to a vessel of the quadrimaran type that is configured with a rigid, robust structure that can be mobilized autonomously, preferably by means of a sail system.

### BACKGROUND OF THE INVENTION

Fish farming systems in the aquaculture industry are well known, and they are basically constituted by a floating structure, a fish net pen that hangs toward the bottom of the body of water from said floating structure, and a mooring system that allows maintaining the shape of the farming module, as well as keeping it in its installation location.

Fish farming systems, whether square, rectangular, round, or of another shape, allow forming or providing a water area in which the fish to be farmed are confined. Generally, farming systems are formed with a determined size that defines the size of the perimeter of the cage structure, which must have a configuration that allows maintaining its resistance and not collapsing due to the action of waves, marine currents, as well as adverse weather conditions. The mooring system is very important for maintaining the shape of the module.

The coastal edge, associated with areas protected from swells and marine currents, has traditionally been preferred for locating structures in said activity. However, the aquaculture industry in recent years has focused its efforts on configuring cage structures that have a shape, structure, and more resistant and robust mooring systems that allow forming farming centers in more exposed or offshore areas.

Traditional aquaculture is generally carried out in protected areas with shallow waters, where pollution is not easy to solve, water quality is not good, and sanitary conditions in general are a problem in farming. Positioning farms near the coast and the constant use of a certain zone or geographical area generates, among other problems, the risk of pollution produced by the activity itself, with consequences for the environment and due to contagion or pollution by external agents, such as microalgae, increase in water temperature, diseases, decrease in oxygen, among others.

Today, the industry is working on development to carry out farming in more exposed areas or in high seas, to avoid pollution and sanitary problems that normally have protected farming areas. However, high-sea farming cages are not mobile, they also require mooring to keep them in place over time, as well as to maintain their shape, they are sensitive to weather, require a very robust structural and mooring configuration, have logistics problems regarding daily feeding and maintenance, translating into high reproduction and maintenance costs. A deep-water farming center is far from the coast, making management and maintenance inconvenient. The farming center must have a great capacity for self-sufficiency and a high level of mechanization, and it must also have a great capacity to resist wind and waves to avoid extreme marine conditions.

The worldwide need for food production and especially proteins continues to grow, so it is necessary to have better spaces to satisfy both current and future demand. It is required to have new farming or fattening zones that allow decompressing the coastal zone.

Then, the task of new positioning of the productive activity in high seas is not immune to difficulties, since it must necessarily move to exposed oceanic zones, or high-energy zones, offshore zones, or high seas, for which it becomes necessary to have farming centers that are capable of facing or moving away from complex situations from the point of view of adverse meteorological conditions, among others.

Document US2022/0061278 A1 (RUIZ NAYEM), published on March 3, 2022, describes an offshore mobile farming or cultivation center or production center for the development of hydrobiological species for breeding, management and production, with a robust design that allows for surface operation and offshore navigation, with high capacity and agility for maneuvering and moving to different locations, comprising: a) a central structure similar to a ship's hull, with a hydrodynamic bow that cuts through deflection waves; b) an integrated perimeter stabilization support for stabilization, flotation, and naval and/or production maneuvers; c) a structural farming area of variable volume; d) metal and/or heavy structural nets for species confinement; e) a system for hoisting or lifting metal and/or heavy nets; and f) internal motorization for autonomous navigation.

Making mobile farms will allow, in part, to replace the missing mass of pelagic fish due to excessive fishing, and thus serve to replace the effect that these produce in the trophic chain of the oceanic ecosystem. The ocean, that is, high seas, has innumerable advantages due to the pristine and uncontaminated nature of its waters, good oxygenation and very little disease proliferation, much more stable conditions and much more predictable changes. The disadvantage is the fact that it is a completely open place, not sheltered, the weather is more severe, and large magnitudes of waves and winds develop, which requires having a very good calculation of the stresses of the structures to be used.

An oceanic farming center must also be of important magnitudes to seek adequate profitability, it is required to design and configure very robust structures and very well calculated with very studied designs to be able to dissipate the stresses to which it will be subjected.

Due to this, the applicant has designed a self-sustaining and self-propelled vessel for fish farming in open sea of the quadrimaran type, which comprises a design that allows a balance between great buoyancy in its parallel hulls not distant from each other, to achieve good stability and achieve a very robust structure. To achieve these effects, the vessel was designed with oval-type tube hulls that provide excellent robustness versus the amount of material used, that is, the ideal shape was achieved to find the maximum resistance versus the material used and the constructive ease of this, to be able to obtain the maximum size in square meters, and thus achieve an important area for the installation of the nets. In addition, the optimal arm shape design was achieved, also as tubular structures and oval shape in the direction of the greatest stress.

The vessel is designed, calculated, and structured to resist any weather condition that occurs in high seas, however, and without prejudice that the concept of aquaculture or confinement and fattening of hydrobiological species in exposed areas has been addressed previously by means of other structures or systems, the solution proposed in the present invention allows keeping it in motion or moving it opportunely from a farming position or area to another, which allows its transfer to ideal optimal zones that improve farming conditions, or moving away from adverse weather conditions such as large swells, storms, hurricanes, typhoons, or other risks associated with winds, currents or marine pollution, which ultimately allows developing a breeding of the confined species in the areas where they naturally develop, and where its transfer or movement capacity allows keeping the farm in zones with ideal conditions of temperature, oxygenation, etc., and allows mobilizing it long distances, being able even to direct it not only to the breeding areas of greater efficiency, but also, subsequently it can dock or approach in its case directly to the slaughter zones, consumption or distribution centers.

### SUMMARY OF THE INVENTION

The object of the invention is to provide a vessel for fish farming in open or oceanic sea whose design, shape, and structural configuration comprises a rigid and robust structure that allows resisting and effectively overcoming the adverse weather conditions that occur in these farming zones, and that can be mobilized in a self-propelled manner, and be autonomous and self-sustaining.

The invention corresponds to a sailboat for fish farming in open or oceanic sea formed by a vessel of the quadrimaran type (1), which basically comprises at least one basic structure (2), at least one containment net (5) to form a farming area, which further comprises at least one bridge of command and accommodations (3), which can be modular and/or removable, at least one sail system (4) that can be modular and/or removable, and at least one storage silo (6), which can be modular and/or removable, where the at least one basic structure (2) comprises at least two main hulls (7), parallel and spaced apart, joined or tied together by at least one arm (8), and adjacent to each of said at least two main hulls (7), further comprises at least two secondary hulls (9) of smaller dimension in their perimeter with respect to the at least two main hulls (7) and that are arranged parallel to each outer side and spaced from said at least two main hulls (7), which are joined or tied to said at least two main hulls through at least one secondary arm (10), where the at least two secondary hulls (9) are configured in pairs per side, that is, at least one upper hull (11) and at least one lower hull (12), arranged parallel one above the other and spaced apart joined by at least one vertical support (13) of union.

### DESCRIPTION OF THE DRAWINGS

In order to help a better understanding of the characteristics of the invention, according to a preferred example of the practical realization of the same, a set of drawings is attached as an integral part of the description where with illustrative and non-limiting character, the invention has been represented.
Figure 1.- corresponds to an upper lateral perspective view of a sailboat for fish farming in open or oceanic sea formed by a self-propelled autonomous vessel of the quadrimaran type according to the present invention.
Figure 2.- corresponds to an upper perspective view of the sailboat for fish farming in open or oceanic sea formed by a self-propelled autonomous vessel of the quadrimaran type according to the present invention, which is illustrated without the fish net pen.
Figure 3.- corresponds to an upper lateral perspective view of the basic structure of the sailboat for fish farming in open or oceanic sea formed by a self-propelled autonomous vessel of the quadrimaran type of the present invention.
Figure 4.- corresponds to a front view of the basic structure of the sailboat for fish farming in open or oceanic sea formed by a self-propelled autonomous vessel of the quadrimaran type of the present invention.
Figure 5.- corresponds to a lateral view of the basic structure of the sailboat for fish farming in open or oceanic sea formed by a self-propelled autonomous vessel of the quadrimaran type of the present invention.
Figure 6.- corresponds to an upper frontal perspective view of the basic structure with the fish net pen of the sailboat for fish farming in open or oceanic sea formed by a self-propelled autonomous vessel of the quadrimaran type of the present invention.
Figure 7.- corresponds to a front view of the basic structure with the fish net pen of the sailboat for fish farming in open or oceanic sea formed by a self-propelled autonomous vessel of the quadrimaran type of the present invention.
Figure 8.- corresponds to an upper perspective view of the sailboat for fish farming in open or oceanic sea formed by a self-propelled autonomous vessel of the quadrimaran type of the present invention which is illustrated without the fish net pen.
Figure 9.- corresponds to a frontal perspective view of the sailboat for fish farming in open or oceanic sea formed by a self-propelled autonomous vessel of the quadrimaran type of the present invention which is illustrated without the fish net pen.
Figure 10.- corresponds to an upper lateral perspective view that shows a detail of the storage silos of the sailboat for fish farming in open or oceanic sea formed by a self-propelled autonomous vessel of the quadrimaran type of the present invention.

### PREFERRED EMBODIMENT OF THE INVENTION

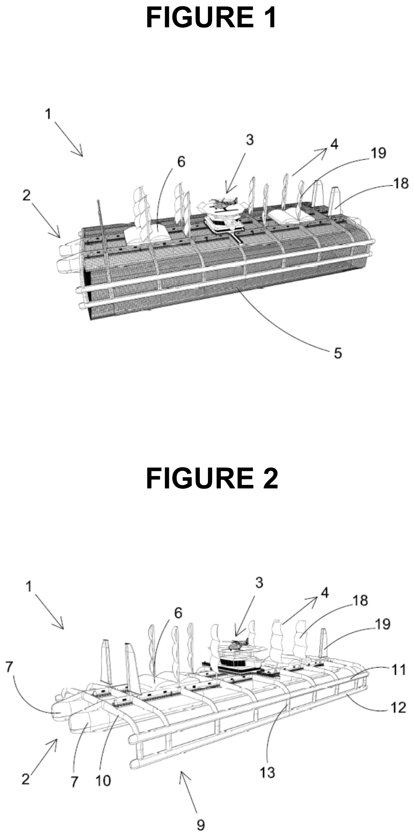

The invention corresponds to a sailboat for fish farming in open or oceanic sea formed by a vessel of the quadrimaran type (1), as representatively illustrated in Figures 1 and 2, which basically comprises at least one basic structure (2), at least one bridge of command and accommodations (3), which can be modular and/or removable, at least one sail system (4) that can be modular and/or removable, at least one containment net (5) to form a farming area, and at least one storage silo (6), which can be modular and/or removable.

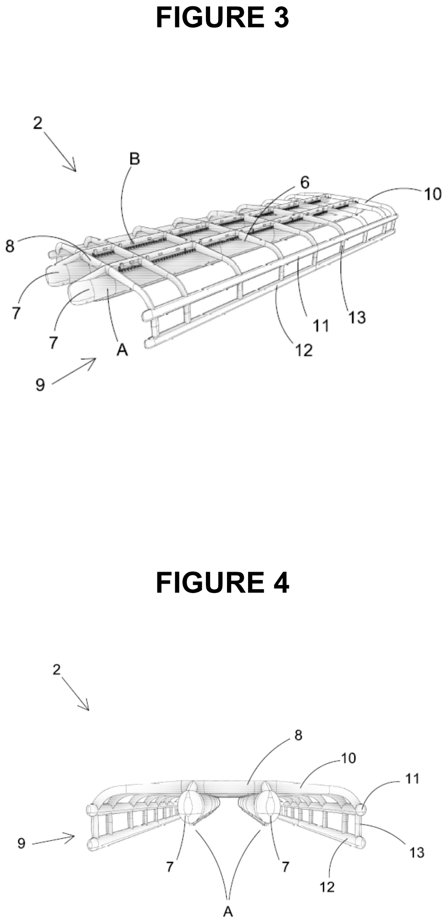

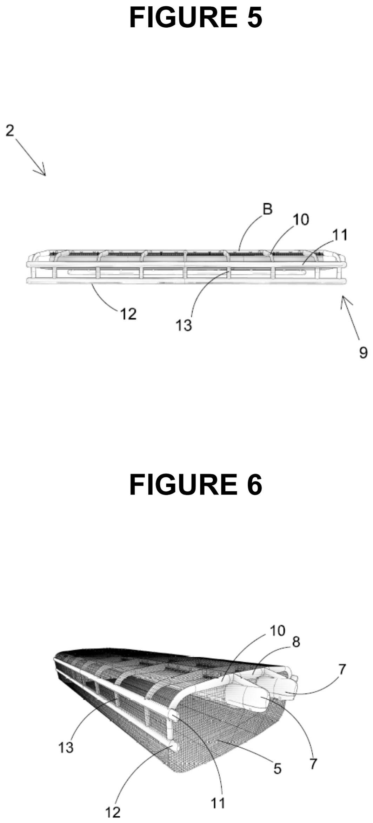

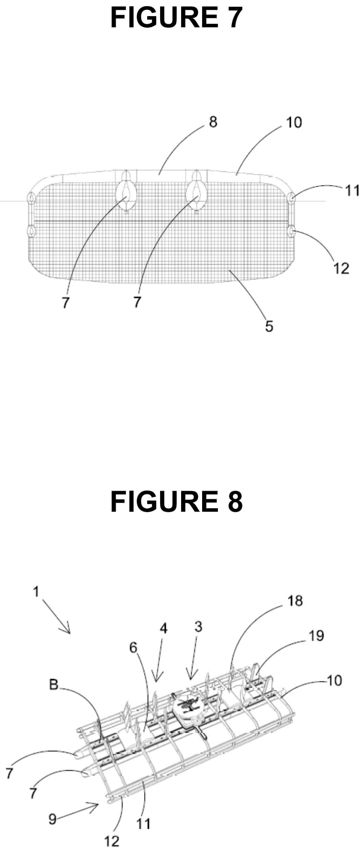

As can be seen in more detail in Figures 3 to 5, 8 and 9, the at least one basic structure (2) comprises at least two main hulls (7), formed of oval, circular and/or elliptical tubes, parallel and spaced apart, which can be partially ballasted, and which have a size or diameter that allows the arrangement inside of systems, equipment and/or apparatuses, to configure harvesting and/or slaughter lines of the farmed species, which are joined or tied together by at least one tubular arm (8) of oval, circular and/or elliptical shape, which seek the maximum area or beam, and thus achieve or obtain the maximum square meters with the maximum resistance, where in addition said at least two main hulls, in part or in their entire longitudinal, of their lower section, may comprise a keel (A), and in their opposite upper section, a closed transit section (B). Adjacent to each of said at least two main hulls (7), robust and long, the basic structure (2) further comprises at least two secondary hulls (9) of smaller dimension in their perimeter with respect to the at least two main hulls (7) and that are arranged parallel each outer side and spaced from said at least two main hulls, and that are configured tubular of oval, circular and/or elliptical shape, which are joined or tied to said at least two main hulls through at least one secondary arm (10) tubular of oval, circular and/or elliptical shape. The at least two secondary hulls (9) are configured in pairs per side, that is, at least one upper hull (11) and at least one lower hull (12), fixed, removable and/or pivotable, arranged parallel one above the other and spaced apart joined by at least one vertical support (13) of union.

The at least upper hull (11) corresponds to a floating type hull, which is submerged only up to approximately half of its diameter, and the at least lower hull (12) corresponds to a submerged hull that functions as a keel, since it can be ballasted, this configuration achieves an impressive beam, but without so much buoyancy so that there are no exaggerated flotation stresses and associated damages to the structures. In addition to serving to provide excellent stabilities, these two smaller hulls joined vertically between them serve as longitudinal keels that in navigation provide outstanding stability to maintain the direction of the vessel.

As can be seen in Figures 1, 6 and 7 the basic structure (2) thus configures a reticulated open structure, in stern, bow, starboard, port, as well as in its lower and upper part, on which meshes (5) are arranged and joined, such as fish net pens, anti-sea lion nets and/or bird nets forming a closed farming area, which allows keeping in confinement the species that will be farmed.

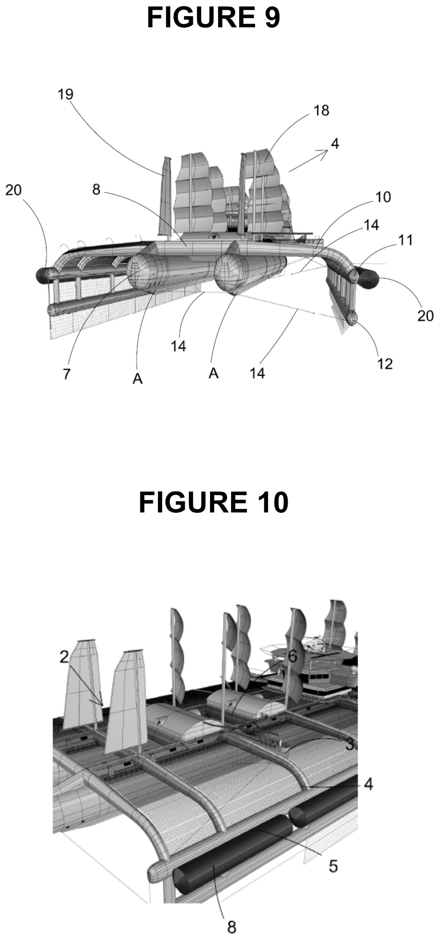

In one embodiment of the invention, as illustrated in Figure 9 the basic structure (2) further comprises at least one rope or reinforcement cable (14) of the tension type, which is joined between the at least the main hulls (7), between the at least secondary hulls (9), between the at least one arm (8) and/or the at least one secondary arm (10), or a combination of union and arrangement between said elements of the at least one basic structure. In addition, as can be seen more specifically in Figure 10, damping elements (20) are joined to the basic structure, specifically joined to the sides of at least two secondary hulls (9).

As illustrated in detail in Figure 10, the at least one removable silo (6) comprises a body (15) that has at least one ventilation window (16) and at least one supply hose (17) connected to said silo body, such that said hose can be connected to a vessel that will dock on one side of the self-propelled autonomous vessel for fish farming in open sea of the quadrimaran type (1) for feed supply.

The configuration of the at least one removable silo (6) allows it to be mounted or dismounted from the basic structure (2), in different arrangements between the reticulated spaces that are formed from the configuration of said at least one basic structure (2), preferably between the spaces generated between the at least two parallel main hulls (7) and the at least one union arm (8), to be arranged in said space.

The at least one sail system (4) as better seen in Figures 1, 8 to 10, comprises at least one propulsion sail (18) that can be of the mainsail type, gaff, among others, that give propulsion to the vessel since it receives all the wind force, and at least one directional or steering sail (19), where each of said sails (18, 19) comprises a mast and at least one deployable sail.

Additionally, for the purpose of obtaining the additional energy required for habitability, navigation and steering system, as well as for the feeding, harvesting and slaughter systems or equipment that will be part of the vessel, whether fixed, modular or removable, as well as all those elements that require energy, will be obtained through renewable energies, such as wind systems, tidal, wave, and/or solar, or a set of these, among others, thus providing a self-propelled autonomous and self-sustaining vessel.

The quadrimaran type hull shape that is provided through the two at least two main hulls (7) as well as the at least two secondary hulls (9) allow providing a large area in square meters of farming, while, maintaining extreme robustness, the stability of the vessel or naval artifact and the excellent conditions or behavior in its Pitch, Roll and Heave movements. These important conditions achieved by its size both in length and beam and its fair balance of flotation of the different parts or elements of the structure, as well as by having a similarity of four keels along its entire length grants an excellent capacity to maintain stable course with very little drift, which in addition the possibility of sailing in both longitudinal directions just by changing the direction of the sail system, which is achieved by not having bow or stern, since these are symmetrical as well as all its infrastructure for navigation aid.

The fact that the structure of this sailboat for fish farming in open or oceanic sea formed by a vessel of the quadrimaran type comprises silos, habitability and command spaces, harvesting systems, slaughter systems, among other equipment, removable and/or modular, not joined to the naval artifact, allows using only the base structure (2) for the installation or support of the containment nets, since its design and structure allows it to be used only as a towed cage, thus providing a towable farming module by one or more vessels.

This versatile condition that the sailboat of the present invention possesses, is achieved by the modular and/or removable condition of its basic constituent elements, since for the manufacturing or structuring process, as a first stage the basic structure (2) will be assembled or manufactured, to which the other basic modular and/or removable elements may or may not be annexed, such as silos, sail system, command and habitability modules, harvesting system, slaughter system, renewable energy production systems, among other systems, equipment, and apparatuses, that are required in a farming center, allow providing a sailboat for farming fish or other oceanic or high-sea hydrobiological species self-sustaining, autonomous and/or sustainable, or a towable oceanic or high-sea farming cage.

Although the form of the sailboat for fish farming in open or oceanic sea formed by a vessel of the quadrimaran type described herein constitutes a preferred inclusion of this invention, it should be understood that the invention is not limited to this precise form and that changes can be made therein without departing from the scope of the invention, which are defined in the appended claims.

## Claims

1. Sailboat for fish farming in open or oceanic sea formed by a vessel of the quadrimaran type (1), which enables the provision of a self-propelled floating structure with a large area and volume for fish farming in the open sea that can operate and move safely in adverse ocean conditions, which comprises at least one basic structure (2), at least one containment net (5) to form a farming area, **CHARACTERIZED in that** it further comprises, at least one bridge of command and accommodations (3), which can be modular and/or removable, at least one sail system (4) that can be modular and/or removable, and at least one storage silo (6), CHARACTERIZED because the basic structure (2) comprises at least two main hulls (7), it further comprises at least two secondary hulls (9) of smaller dimension in their perimeter with respect to the at least two main hulls (7) and that are arranged in parallel form to each outer side and spaced from said at least two main hulls (7), which are joined to at least two main hulls via at least one secondary arm (10), wherein the basic structure (2) mesh and/or said at least one confinement net (5) and wherein the at least two secondary hulls (9) are configured in pairs for each side and comprise at least one floating upper hull (11) and at least one submerged and ballastable lower hull (12), arranged parallel to each other and spaced apart, joined by at least one vertical connecting support (13), and where said sailboat for fish farming further comprises at least one sail system (4), and where said arms (8) connecting the main hulls (7) and the secondary arms (10) connecting the secondary hulls (9) to the main hulls are a continuous structure from side to side, and where said at least one steering bridge and accommodations (3), the at least one storage silo (6), and the at least one sail system (4) are modular and/or removable.

2. Sailboat for fish farming in the open sea or ocean, according to claim 1, **CHARACTERIZED in that** the at least upper hull (11) corresponds to a floating hull, which is submerged only up to approximately half of its diameter, and the at least lower hull (12) corresponds to a hull that is submerged and functions as a keel, as it can be ballasted.

3. Sailboat for fish farming in open or oceanic sea, according to the preceding claims, **CHARACTERIZED in that** the basic structure (2) further comprises at least one rope or reinforcement cable (14) of the tension type, which is joined between the at least the main hulls (7), between the at least secondary hulls (9), between the at least one arm (8) and/or the at least one secondary arm (10), or a combination of union and arrangement between said elements of the at least one basic structure.

4. Sailboat for fish farming in open or oceanic sea, according to the preceding claims, **CHARACTERIZED in that** it further comprises damping elements (20) that are joined to the basic structure, specifically joined to the sides of at least two secondary hulls (9).

5. Sailboat for fish farming in open or oceanic sea, according to the preceding claims, **CHARACTERIZED in that** the at least one removable silo (6) comprises a body (15) that has at least one ventilation window (16) and at least one supply hose (17) connected to said silo body.

6. Sailboat for fish farming in open or oceanic sea, according to the preceding claims, **CHARACTERIZED in that** the at least one sail system (4) comprises at least one propulsion sail (18) that can be of the mainsail type, gaff, among others, that give propulsion to the vessel since it receives all the wind force, and at least one directional or steering sail (19), where each of said sails (18, 19) comprises a mast and at least one deployable sail.

7. Sailboat for fish farming in open or oceanic sea, according to the preceding claims, **CHARACTERIZED in that** the at least two main hulls (7), formed of oval, circular and/or elliptical tubes, parallel and spaced apart, which can be partially ballasted.

8. Sailboat for fish farming in open or oceanic sea, according to the preceding claims, **CHARACTERIZED in that** the at least two secondary hulls (9) are of smaller dimension in their perimeter with respect to the at least two main hulls (7), and are configured tubular of oval, circular and/or elliptical shape.

9. Sailboat for fish farming in open or oceanic sea, according to the preceding claims, **CHARACTERIZED in that** it further comprises feeding, harvesting and slaughter systems or equipment, whether fixed, modular or removable, as well as equipment or systems for production of renewable energies, fixed, modular and/or removable, such as wind systems, tidal, wave, and/or solar, or a set of these.
